(19) Europäisches Patentamt
European Patent Office
Office européen des brevets

(11) **EP 4 553 045 A1**

(12) **EUROPEAN PATENT APPLICATION**

(43) Date of publication:
**14.05.2025 Bulletin 2025/20**

(21) Application number: **24211266.2**

(22) Date of filing: **06.11.2024**

(51) International Patent Classification (IPC):
***C01G 53/42*** (2025.01)  ***C01G 53/84*** (2025.01)

(52) Cooperative Patent Classification (CPC):
**C01G 53/42; C01G 53/84;** C01P 2002/52;
C01P 2002/86; C01P 2002/88; C01P 2004/03;
C01P 2004/04; C01P 2004/20; C01P 2004/50;
C01P 2004/51; C01P 2004/61; C01P 2004/62;
C01P 2004/82; C01P 2004/84; C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.11.2023 KR 20230152969**

(71) Applicant: **Samsung SDI Co., Ltd.
Gyeonggi-do 17084 (KR)**

(72) Inventors:
• **CHOI, Aram
17084 Yongin-si (KR)**
• **SHIN, Dongwook
17084 Yongin-si (KR)**

• **HONG, Soonkie
17084 Yongin-si (KR)**
• **CHOI, Seungyeon
17084 Yongin-si (KR)**
• **CHA, Minah
17084 Yongin-si (KR)**
• **KIM, Soohyeon
17084 Yongin-si (KR)**
• **HA, Jeuk
17084 Yongin-si (KR)**
• **KIM, Minhan
17084 Yongin-si (KR)**

(74) Representative: **Marks & Clerk LLP
15 Fetter Lane
London EC4A 1BW (GB)**

(54) **POSITIVE ELECTRODE ACTIVE MATERIALS, PREPARATION METHODS THEREOF, POSITIVE ELECTRODES, AND RECHARGEABLE LITHIUM BATTERIES**

(57)    A positive electrode active material, a preparation method thereof, and a positive electrode including the same, and a rechargeable lithium battery are provided. The positive electrode active material including particles having a core of a lithium nickel-based composite oxide, and a nickel reduction layer arranged on the surface of the core and containing nickel with an oxidation number of less than 3+. The nickel reduction layer has a thickness of less than, or equal to, 10 nanometers from a surface of the particle to a center of the particle.

FIG. 12

**EP 4 553 045 A1**

Description

BACKGROUND

1. Field

According to one or more embodiments, the present disclosure relates to positive electrode active materials, preparation methods thereof, positive electrodes including the positive electrode active materials, and rechargeable lithium batteries including the positive electrodes.

2. Description of the Related Art

A portable information device such as a cell phone, a laptop, smart phone, and/or the like and/or an electric vehicle may utilize, as a driving power source, a rechargeable lithium battery having relatively high energy density and relatively high (e.g., easy) portability. Recently, research has been actively conducted to utilize a rechargeable lithium battery with relatively high energy density as a driving power source, e.g., for hybrid and/or electric vehicles and/or power storage power source, e.g., for resident power storage (e.g., a power wall).

One or more suitable positive electrode active materials have been investigated to achieve or realize rechargeable lithium batteries for applications to such utilizations. Among them, lithium nickel-based oxide, lithium nickel manganese cobalt composite oxide, lithium nickel cobalt aluminium composite oxide, and lithium cobalt-based oxide are mainly utilized as positive electrode active materials. High nickel-based positive electrode active materials with a nickel content (e.g., amount) of greater than, or equal to, about 80 mol% have been actively developed in recent years because they can achieve relatively high energy density. However, limitations to utilizing these positive electrode active materials may be caused by structural deterioration due to charging and discharging, surface side reactions with the electrolyte, and/or deterioration due to particle cracking. Accordingly, the development of a positive electrode active material that realizes relatively high energy density and long cycle-life characteristics is desired or required.

SUMMARY

One or more aspects are directed toward a positive electrode active material including a lithium nickel-based composite oxide, a positive electrode, and lithium secondary battery that may achieve high capacity, suppress or reduce structural deterioration and crack generation due to charging and discharging, and achieve or realize long cycle-life characteristics.

Additional aspects will be set forth in part in the description which follows and, in part, will be apparent from the description, or may be learned by practice of the presented embodiments of the disclosure.

According to one or more embodiments, a positive electrode active material includes (e.g., in a form of) a particle (e.g., includes or be in the form a plurality of particles), the particle including a core of a lithium nickel-based composite oxide, and a nickel reduction layer arranged on a surface of the core and including nickel with an oxidation number of less than about 3+. The nickel reduction layer may have a thickness of less than, or equal to, about 10 nanometers (nm), as measured from a particle surface (i.e., the surface of the particle) to a particle center (i.e., the center of the particle).

According to one or more embodiments, a method of preparing a positive electrode active material includes mixing a nickel-based composite hydroxide and a lithium raw material followed by a first firing, pulverizing a first fired product and washing with a washing water to provide a washed first fired product, drying the washed first fired product followed by a second firing, wherein a weight ratio of a pulverized first fired product and the washing water is about 1:0.5 to about 1:0.9.

One or more embodiments provide a positive electrode for a rechargeable lithium battery including the aforementioned positive electrode active material.

One or more embodiments provide a rechargeable lithium battery including the positive electrode, a negative electrode, and an electrolyte.

At least some of the above and other features of the invention are set out in the claims.

The positive electrode active material according to one or more embodiments may achieve or realize high capacity and long cycle-life characteristics by suppressing or reducing structural deterioration, crack generation, and/or side reactions with the electrolyte, e.g., due to repeated charging and discharging.

BRIEF DESCRIPTION OF THE DRAWINGS

FIGs. 1-4 are each a schematic diagram showing a lithium rechargeable battery according to one or more embodiments.

FIG. 5 is a transmission electron microscope (TEM) image of a cross-section of a first positive electrode active material prepared in Comparative Example 1 cut with a focused ion beam (FIB).

FIG. 6 is a scanning transmission electron microscope (STEM) image taken by enlarging a portion indicated by a square in FIG. 5.

FIG. 7 is a result of electron energy loss spectroscopy (EELS) in a direction indicated by an arrow in FIG. 6.

FIG. 8 is an image reflecting the analysis results of FIG. 7 in the TEM image of the cross section of the positive electrode active material of Comparative Example 1.

FIG. 9 is a TEM image of a cross-section cut through FIB of the first positive electrode active material prepared in Example 1.

FIG. 10 is a STEM image taken by enlarging a portion marked by an arrow in FIG. 9.

FIG. 11 shows the results of performing EELS in the direction indicated by an arrow in FIG. 10.

FIG. 12 is an image reflecting the analysis results of FIG. 11 in the TEM image of the cross section of the positive electrode active material of Example 1.

FIG. 13 shows the results of differential scanning calorimetry (DSC) analysis of the positive electrode active materials prepared in Example 1 and Comparative Example 1.

FIG. 14 is a graph showing the cycle-life characteristic evaluation of the lithium rechargeable batteries of Example 1 and Comparative Example 1.

FIG. 15 is an SEM image of a cross section of the positive electrode active material of Comparative Example 1 taken after 75 cycles.

FIG. 16 is an enlarged image of the first positive electrode active material (large particles) shown in FIG. 15.

FIG. 17 is an enlarged image of the second positive electrode active material (small particles) shown in FIG. 15.

FIG. 18 is an SEM image of a cross section of the positive electrode active material of Example 1 taken after 75 cycles.

## DETAILED DESCRIPTION

Hereinafter, specific embodiments will be described in more detail so that those of ordinary skill in the art can easily implement them. Examples of which are illustrated in the accompanying drawings, wherein like reference numerals refer to like elements throughout, and duplicative descriptions thereof may not be provided. Accordingly, the embodiments are merely described, by referring to the drawings, to explain aspects of the present description. However, the present disclosure may be embodied in many different forms and is not construed as limited to the example embodiments set forth herein, rather the present disclosure is defined by the scope of claims.

The terminology utilized herein is utilized to describe embodiments only, and is not intended to limit the present disclosure. The singular expressions "a," "an," and "the" include the plural expressions, including "at least one," unless the context clearly dictates otherwise.

As utilized herein, "combination thereof" refers to a mixture, a laminate, a composite, a copolymer, an alloy, a blend, a reaction product, and/or the like of the constituents.

Herein, it should be understood that utilizing terms such as "comprises," "comprise," "comprising," "includes," "including," "include," "having," "has," and/or "have" are intended to designate the presence of an embodied aspect, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, are exaggerated for clarity, wherein like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

**Definitions**

The term "particle diameter" as utilized herein refers to an average diameter of particles if (e.g., when) the particles are spherical, and refers to an average major axis length of particles if (e.g., when) the particles are non-spherical. For example, the average particle diameter may be measured by a method well known to those skilled in the art, for example, by a particle size analyzer, or by a transmission electron microscopic image or a scanning electron microscopic image. It may be possible to obtain an average particle diameter value by measuring utilizing a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. If (e.g., when) measuring by laser diffraction, more specifically, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated. As utilized herein, if (e.g., when) a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscopic image.

Herein, the term "or" is not to be construed as an exclusive meaning, for example, "A or B" is construed to include A, B, A+B, and/or the like.

Herein, the term "metal" is interpreted as a concept including ordinary metals, transition metals and metalloids (semi-metals).

**Positive Electrode Active Material**

In one or more embodiments, a positive electrode active material is provided as (e.g., in the form of) a particle (e.g., as a plurality of particles each) including a core of a lithium nickel-based composite oxide, and further includes a nickel reduction layer arranged on a surface of the core. The nickel reduction layer includes nickel with an oxidation number of less than 3+, wherein the nickel reduction layer is present with a thickness of less than, or equal to, about 10 nanometers (nm), e.g., as measured from a particle surface (i.e., the surface of the particle) to (e.g., toward) a particle center (i.e., the center of the particle).

The nickel content (e.g., amount) may be greater than, or equal to, about 80 mol%, for example, greater than, or equal to, about 85 mol%, greater than, or equal to, about 90 mol%, greater than, or equal to, about 91 mol%, greater than, or equal to, about 94 mol%; or less than, or equal to, about 99 mol% based on 100 mol% of a total amount of metal excluding lithium in the lithium nickel-based composite oxide.

For example, the lithium nickel-based composite oxide may be represented by Chemical Formula 1.

$$\text{Chemical Formula 1} \qquad \text{Li}_{a1}\text{Ni}_{x1}\text{M}^1_{y1}\text{M}^2_{z1}\text{O}_{2-b1}\text{X}_{b1}$$

In Chemical Formula 1, $0.9 \leq a1 \leq 1.2$, $0.8 \leq x1 < 1$, $0 < y1 \leq 0.2$, $0 \leq z1 \leq 0.2$, $0.9 \leq x1+y1+z1 \leq 1.1$, and $0 \leq b1 \leq 0.1$, $\text{M}^1$ and $\text{M}^2$ may each independently be at least one (e.g., one or more) element selected from among Al, B, Ba, Ca, Ce, Co, Cr, Cu, Fe, Mg, Mn, Mo, Nb, Si, Sn, Sr, Ti, V, W, Y, Zn, and Zr, and X may be at least one (e.g., one or more) element selected from among F, P and S.

In Chemical Formula 1, for example, $0.85 \leq x1 < 1$, $0 < y1 \leq 0.15$, and $0 \leq z1 \leq 0.15$ or $0.9 \leq x1 < 1$, $0 < y1 \leq 0.1$, and $0 \leq z1 \leq 0.1$.

For example, the lithium nickel-based composite oxide may be represented by Chemical Formula 2 or Chemical Formula 3.

$$\text{Chemical Formula 2} \qquad \text{Li}_{a2}\text{Ni}_{x2}\text{Co}_{y2}\text{M}^3_{z2}\text{O}_{2-b2}\text{X}_{b2}$$

In Chemical Formula 2, $0.9 \leq a2 \leq 1.2$, $0.8 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$, $\text{M}^3$ may be at least one (e.g., one or more) element selected from among Al, B, Ba, Ca, Ce, Cr, Cu, Fe, Mg, Mn, Mo, Nb, Si, Sn, Sr, Ti, V, W, Y, Zn, and Zr, and X may be F, P, S and/or a (e.g., any suitable) combination thereof.

In Chemical Formula 2, for example, $0.9 \leq x2 \leq 0.99$, $0.01 \leq y2 \leq 0.1$, and $0 \leq 2 \leq 0.1$.

$$[\text{Chemical Formula 3}] \qquad \text{Li}_{a3}\text{Ni}_{x3}\text{Co}y_3\text{M}^4_{z3}\text{M}^5_{w3}\text{O}_{2-b3}\text{X}_{b3}$$

In Chemical Formula 3, $0.9 \leq a3 \leq 1.2$, $0.8 \leq x3 \leq 0.98$, $0.01 \leq y3 \leq 0.19$, $0.01 \leq z3 \leq 0.19$, $0 \leq w3 \leq 0.19$, $0.9 \leq x3+y3+z3+w3 \leq 1.1$, and $0 \leq b3 \leq 0.1$, $\text{M}^4$ may be Al, Mn, and/or a (e.g., any suitable) combination thereof, $\text{M}^5$ may be at least one (e.g., one or more) element selected from among B, Ba, Ca, Ce, Cr, Cu, Fe, Mg, Mo, Nb, Si, Sn, Sr, Ti, V, W, Y, Zn, and Zr, and X may be F, P, S and/or a (e.g., any suitable) combination thereof.

In Chemical Formula 3, for example, $0.9 \leq x3 \leq 0.98$, $0.01 \leq y3 \leq 0.09$, $0.01 \leq z3 \leq 0.09$, and $0 \leq 3w3 \leq 0.09$.

It will be understood that high nickel-based positive electrode active materials require a water washing process due to excessive generation of residual lithium on the particle surface during the synthesis process. In the washing process, lithium compounds such as $\text{Li}_2\text{CO}_3$, LiOH, and/or the like, alone on the positive electrode active material particle surface should be ideally removed. However, according to degrees, conditions, and/or the like, of the washing process, even active lithium inside the positive electrode active material may be removed therewith. In this way, if (e.g., when) the lithium inside the positive electrode active material structure is removed, reversible capacity may not only be reduced, but also crystal structural change or phase transition may occur, thereby deteriorating performance. For example, if (e.g., when) lithium is eluted, lithium-nickel-oxide, and/or the like, may be changed into nickel oxides, and/or the like, for example, formed into NiO, resultantly bringing about a reduction in which the oxidation number of Ni is lowered from 3+ to 2+. Because Ni(II) compounds such as NiO, and/or the like, are not converted back into lithium-containing compounds, the result may be not only to reduce reversible capacity, but to also promote side reactions of the positive electrode active material particle surface and an electrolyte, thereby leading to deterioration of overall battery performance. In this way, on the positive electrode active material particle surface, a portion where the oxidation number of nickel becomes lower than 3+ may be referred to as a "nickel reduction layer," for example, a "low oxidation layer" or a "disordering layer."

In one or more embodiments, by appropriately or suitably adjusting the washing process to reduce a thickness of the nickel reduction layer to be about 10 nanometers (nm) or less, it may be possible to provide a positive electrode active material capable of suppressing or reducing degradation of the positive electrode active material, e.g., according to the charges and discharges, and improving cycle-life characteristics of a rechargeable lithium battery.

A thickness of the nickel reduction layer may be, for example, less than, or equal to, about 7 nm, e.g., about 1 nm to about 7 nm, about 1 nm to about 5 nm, or about 2 nm to about 4 nm. The thickness of the nickel reduction layer may be measured through TEM-EELS analysis for the cross-section of the particle of the positive electrode active material. For example, EELS analysis is performed from the surface of the particle toward the inside in the TEM image of the cross-section of the particle of the positive electrode active material, and in the EELS analysis graph, the portion where the peak around 855 eV shifts to the left can be recognized as the portion where the oxidation number of nickel has changed to less than 3+, and this portion can be defined as the nickel reduction layer. The nickel reduction layer according to one or more embodiment is observed to have a thickness range of 10 nm or less from the surface toward the inside of the particle.

The nickel reduction layer may include NiO, and a composition inside the particle, (i.e., excluding the nickel reduction layer), for example, may be a mixture of a composition of Chemical Formula 1 and a compound such as NiO. Accordingly, an oxidation number of the nickel in the nickel reduction layer may be greater than, or equal to, about 2+ and less than about 3+, for example, greater than, or equal to, about 2+ and/or less than, or equal to, about 2.5+.

In one or more embodiments, the oxidation number of the nickel in (e.g., each of) the particles excluding the nickel reduction layer may be about 3+.

The particles may be in a form of secondary particles (e.g., particles with cores of secondary particles) that may be (e.g., may each be) provided or made by agglomerating a plurality of primary particles (i.e., an agglomerated plurality of primary particles) or may be (e.g., in a form of) single particles (e.g., each being a monolithic core).

The particles have an average particle diameter ($D_{50}$) that may be about 0.5 micrometers ($\mu$m) to about 20 $\mu$m, or about 1 $\mu$m to about 18 $\mu$m. For example, if (e.g., when) the particles are in the form of the secondary particles, an average particle diameter ($D_{50}$) of the secondary particles may be about 3 $\mu$m to about 20 $\mu$m, about 5 $\mu$m to about 18 $\mu$m, or about 8 $\mu$m to about 15 $\mu$m. If (e.g., when) the particles are in the form of single particles, an average particle diameter ($D_{50}$) of the single particles may be about 0.5 $\mu$m to about 8 $\mu$m, or about 1 $\mu$m to about 5 $\mu$m. The average particle diameter refers to a diameter ($D_{50}$) of particles having a cumulative volume of 50 volume% in the particle size distribution that is obtained by measuring the size (particle diameter or major axis length) of about 20 particles at random in a scanning electron microscope image.

Herein, the single particles may exist alone without a grain boundary within the particle, and each may be composed of one particle, e.g., that may be selected from among a single particle (e.g., with a single particle core), a monolith structure (e.g., with a monolithic core), a one-body structure (e.g., with a one-body core), and/or a non-agglomerated particle (e.g., with a non-agglomerated core), (in which particles are not agglomerated with each other but exist as an independent phase in terms of morphology). In some embodiments, the particles may be expressed as a single particle (one-body particle, single grain), for example, as a single crystal. The single particles may exist alone, or single particles may be agglomerated together. For example, about 2 to about 10 single particles may be agglomerated, and be in contact, with each other.

In one or more embodiments, if (e.g., when) the particles are in the form of secondary particles (cores), at least a portion of the primary particles constituting each of the secondary particles (cores) may be arranged in a radial shape. Hereinafter, the radial shape is explained in more detail.

At least a portion of the primary particles constituting the secondary particles may have a plate shape (e.g., in a form of plates). In the plate structure, a maximum length of the widest side may be called to be a length (a) of the major axis, while a maximum length of a side approximately normal (e.g., perpendicular) thereto may be called to be a thickness (t), wherein the thickness (t) may be shorter than the major axis length (a). A direction of the major axis length (a) may be referred to as a plane direction, while a direction in which the thickness is defined may be referred to as a thickness direction. In one or more embodiments, a radial array structure refers to that the primary particles are aligned in the thickness direction normal (e.g., perpendicular) to a direction from the center of the secondary particles toward the surface or forming an angle of $\pm 5$ °.

If (e.g., when) at least a portion of the primary particles have the radial array structure, there may be relatively more lithium diffusion passages between the primary particles around the surface of the secondary particles. As a result, more crystal surfaces capable of transferring lithium to the outside, (e.g., improving lithium diffusion), may be exposed, thereby providing or securing high initial efficiency and capacity. In one or more embodiments, open pores exposed to the surface are directed toward the center of the secondary particles, which may promote the lithium diffusion. In one or more embodiments, the radially arranged primary particles may enable substantially uniform contraction and expansion of the secondary particles on deintercalation and/or intercalation of lithium. Such open pores may exist in the (001) direction, (e.g., that particles expand on during the deintercalation of lithium), and thus may provide, or act as, a buffer against the contraction and expansion. In one or more embodiments, there may be less possible occurrence of cracks due to the sizes and the array of the primary particles during the contraction and expansion of the secondary particles. For example, pores inside the secondary particles may further alleviate volume changes and thus reduce the cracks between the primary particles during the charge and discharge, resultantly improving cycle-life characteristics and/or reducing an increase in the resistance of the rechargeable lithium battery.

For example, the secondary particles may include an inner portion including an irregular porous structure and an outer portion including the radial array structure as a region around (e.g., surrounding) the inner portion. For example, the primary particles placed in the inner portion may be arranged without regularity, unlike the primary particles placed in the outer portion. The radial array structure refers to that at least a portion of the primary particles are radially aligned. A pore size and porosity in the inner portion may be larger and irregular compared with those in the outer portion.

If (e.g., when) the secondary particles have the irregular porous structure in the inner portion, there may be an aspect of reducing a diffusion distance of lithium ions to the inner portion, and in the outer portion, the lithium ions may be easily inserted to the surface where the primary particles are radially arranged. In one or more embodiments, because the primary particles have a small size, it is easy to establish and maintain (e.g., secure) a lithium transfer path between the particles. Furthermore, the primary particles, which have pores between themselves, as well as the small size, may alleviate a volume change during the charge and discharge, resultantly minimizing or reducing stress according to the volume change during the charge and discharge. Such a positive electrode active material may reduce resistance of a rechargeable lithium battery and improve capacity characteristics and cycle-life characteristics.

The positive electrode active material according to one or more embodiments may have a ratio of the peak intensity at about 250 °C to the peak intensity at about 220 °C of less than 20 in a differential scanning calorimetry (DSC) analysis, for example, less than, or equal to, about 19, or less than, or equal to, about 15.

In one or more embodiments, in the DSC analysis, the positive electrode active material according to one or more embodiments may have no peak in a range of about 170 °C to about 210 °C, for example, around about 190 °C. Furthermore, in the DSC analysis, in the range of about 170 °C to about 210 °C (e.g., about 190 °C), the positive electrode active material according to one or more embodiments may have exothermic heat in a range of less than, or equal to, about 30 joule per gram (J/g), or about 1 J/g to about 20 J/g. If (e.g., when) the positive electrode active material satisfies the DSC analysis results described herein, structural deterioration and crack generation according to the charge and discharge may be suppressed or reduced, to achieve or realize excellent or suitable cycle-life characteristics.

**Method of Preparing Positive Electrode Active Material**

In one or more embodiments, a method of preparing a positive electrode active material includes (i) mixing a nickel-based composite hydroxide and at least one lithium raw material(s) followed by a first firing, (e.g., to provide a first fired product), (ii) pulverizing the first fired product and washing (e.g., a pulverized first fired product) with a washing water to provide a washed first fired product, and (iii) drying the washed first fired product followed by a second firing. Herein, a weight ratio of the pulverized first fired product and the washing water is about 1:0.5 to about 1:0.9, e.g., in the washing step (e.g., act or task). For example, the weight ratio may be, about 1:0.6 to about 1:0.8, or about 1:0.7 to about 1:0.9.

Because a high nickel-based positive electrode active material may have residual lithium excessively (or substantially) generated on the surface, washing is performed during the synthesis process. Herein, in general (i.e. conventional methods), about 1 part by weight or more of the washing water, based on about 1 part by weight of the positive electrode active material, may be utilized for the washing. In one or more embodiments, there may be an attempt to reduce or alleviate the (e.g., amount of) washing by adjusting the washing water to be about 0.9 parts by weight or less, based on about 1 part by weight of the positive electrode active material. For example, refraining from the additional utilization of the washing water may avoid further increase of the thickness of the nickel reduction layer on the positive electrode active material particle surface (e.g., on the surface of the particle of the positive electrode active material) and/or may suppress or reduce structural degradation of the positive electrode active material according to repeated charges and discharges, resultantly improving cycle-life characteristics of a rechargeable lithium battery.

The nickel content (e.g., amount) may be greater than, or equal to, about 80 mol%, for example, greater than, or equal to, about 85 mol%, greater than, or equal to, about 90 mol%, greater than, or equal to, about 91 mol%, greater than, or equal to, about 94 mol%; or less than, or equal to, about 99 mol% based on 100 mol% of a total amount of metal in the nickel-based composite hydroxide.

In one or more embodiments, the nickel-based composite hydroxide may be represented by Chemical Formula 11.

$$\text{Chemical Formula 11} \qquad Ni_{x11}M^{11}_{y11}M^{12}_{z11}(OH)_2$$

In Chemical Formula 11, $0.8{\leq}x11{<}1$, $0{<}y11{\leq}0.2$, $0{\leq}z11{\leq}0.2$, $0.9{\leq}x11{+}y11{+}z11{\leq}1.1$, and $M^{11}$ and $M^{12}$ may each independently be at least one (e.g., one or more) element selected from among Al, B, Ba, Ca, Ce, Co, Cr, Cu, Fe, Mg, Mn, Mo, Nb, Si, Sn, Sr, Ti, V, W, Y, Zn, and Zr.

In Chemical Formula 11, for example, $0.85{\leq}x11{<}1$, $0{<}y11{\leq}0.15$, and $0{\leq}z11{\leq}0.15$ or $0.9{\leq}x11{<}1$, $0{<}y11{\leq}0.1$, and $0{\leq}z11{\leq}0.1$.

A mole ratio of a metal of the nickel-based composite hydroxide and a lithium of the lithium raw material may be, for example about 1:0.9 to about 1:1.2.

The first firing may be carried out in an oxygen atmosphere, for example, at a temperature range of about 700 °C to about 950 °C, or about 730 °C to about 900 °C, or about 750 °C to about 890 °C, and for about 2 hours to about 20 hours, or about 4 hours to about 18 hours.

The second firing may be carried out in an oxygen atmosphere, for example, at a temperature range of about 600 °C to about 820 °C, or about 650 °C to about 800 °C, or about 670 °C to about 750 °C, and for about 2 hours to about 20 hours, or about 3 hours to about 17 hours. Additionally, the second firing (i.e., heat treatment) temperature may be lower than the first firing (i.e., heat treatment) temperature, and the second firing (i.e., heat treatment) time may be substantially the same as, or shorter than, the first firing (i.e., heat treatment) time.

**Positive Electrode**

Some embodiments provide a positive electrode for a rechargeable lithium battery including the aforementioned positive electrode active material. For example, the positive electrode may include a positive electrode current collector and a positive electrode active material layer located on the positive electrode current collector, wherein the positive electrode active material layer may include the aforementioned positive electrode active material. The positive electrode active material layer may further include other types (kinds) of positive electrode active materials in addition to the aforementioned positive electrode active materials described herein and may optionally further include a binder, a conductive material, and/or a (e.g., any suitable) combination thereof.

**Binder**

The binder may improve binding properties of positive electrode active material particles with one another and/or with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

**Conductive Material**

The conductive material (e.g., electron conductor) is included to provide electrode conductivity and any electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al, but the present disclosure is not limited thereto.

**Rechargeable Lithium Battery**

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

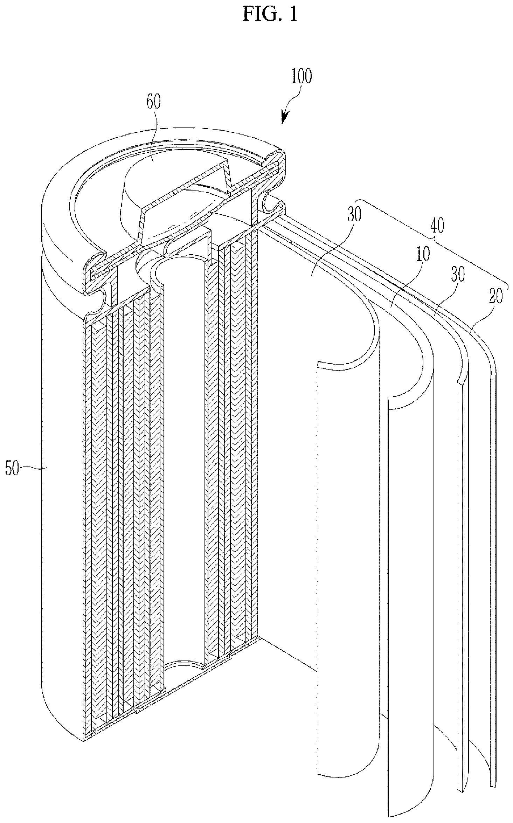

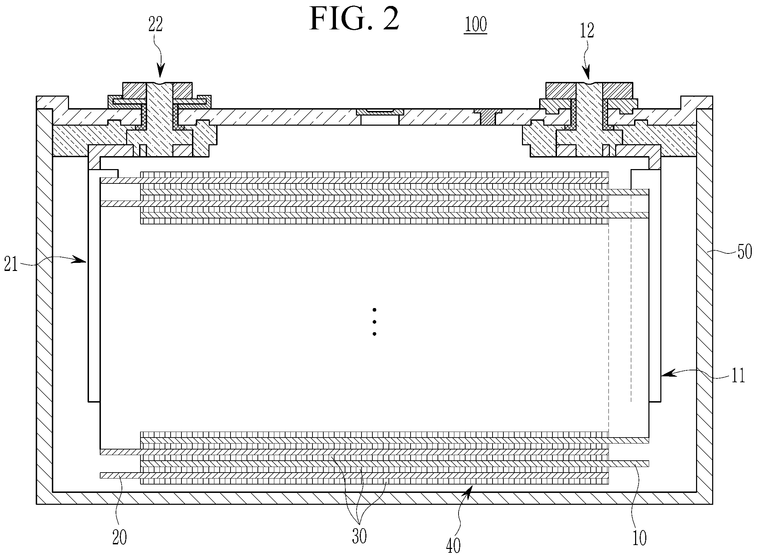

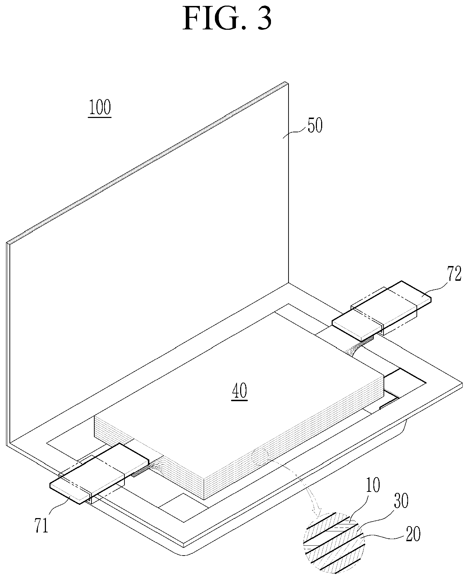

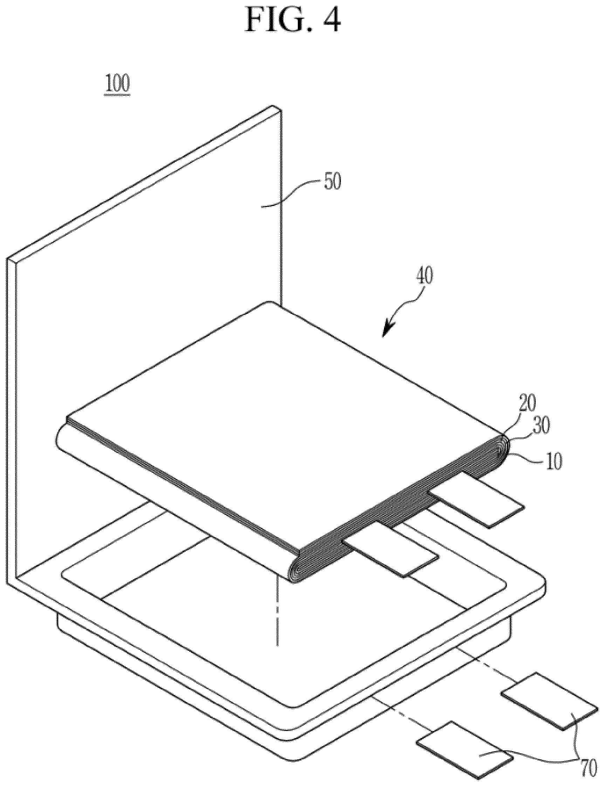

The rechargeable lithium battery may be classified into cylindrical, prismatic, pouch, coin, and/or the like, e.g., depending on the shape. FIGs. 1 to 4 are schematic diagrams showing the rechargeable lithium battery according to one or more embodiments, where FIG. 1 is a cylindrical battery, FIG. 2 is a prismatic battery, and FIGs. 3 and 4 are each a pouch-shaped battery. Referring to FIGs. 1 to 4, the rechargeable lithium battery 100 includes an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals a case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIG. 3, the rechargeable lithium battery 100 includes electrode tabs, e.g., a positive electrode tab 71 and a negative electrode tab 72 serving as an electrical path for inducing the current formed in the electrode assembly 40 to the outside. As shown in FIG. 4, the rechargeable lithium battery 100 includes electrode tabs 130 serving as an electrical path for inducing the current formed in an electrode assembly 120 to the outside.

**Negative Electrode**

The negative electrode may include a current collector and a negative electrode active material layer on the current collector, and may further include a negative electrode active material, a binder, a conductive material, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or a transition metal oxide.

Examples of the material that reversibly intercalates/deintercalates lithium ions may include, crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers), and may be natural graphite or artificial graphite. The amorphous carbon may be a soft carbon, a hard carbon, a mesophase pitch carbonization product, calcined coke, and/or the like.

The lithium metal alloy may include an alloy of lithium and at least one metal of (e.g., one or more selected from among) Na, K, Rb, Cs, Fr, Be, Mg, Ca, Sr, Si, Sb, Pb, In, Zn, Ba, Ra, Ge, Al, and/or Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, $SnO_x$ ($0 < x \leq 2$), a Sn alloy, and/or a (e.g., any suitable) combination thereof.

The silicon-carbon composite may be a composite of silicon and amorphous carbon. An average particle diameter ($D_{50}$) of the silicon-carbon composite particles may be, for example, about 0.5 $\mu$m to about 20 $\mu$m. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be (exist) dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nanometers (nm) to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, or in an oxidized form. The oxidized form of silicon may be represented by $SiO_x$ ($0 < x \leq 2$). In some embodiments, the atomic content (e.g., amount) ratio of Si:O, which indicates a degree of oxidation, may be about 99:1 to about 33:67. As utilized herein, if (e.g., when) a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and utilized, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material (e.g., the electron conductor) is included to provide electrode conductivity and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be utilized alone or in a mixture of two or more types (kinds), and if (e.g., when) two or more types (kinds) are utilized in a mixture, a mixing ratio can be appropriately or suitably adjusted according to the desired or suitable battery performance, which is widely suitable to those working in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the described range, the electrolyte has appropriate or suitable ionic conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 micrometer ($\mu$m) to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiOs$, $BaTiOs$, $Mg(OH)_2$, boehmite, and/or a (e.g., any suitable) combination thereof, but the present disclosure is not limited thereto. An average particle diameter ($D_{50}$) of the inorganic particles may be about 1 nm to about 2000 nm, for example, about 100 nm to about 1000 nm, or 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Examples and comparative examples of the present disclosure are described in more detail herein. However, the following examples are only examples of one or more embodiments, and the present disclosure is not limited to the following examples.

**EXAMPLES**

**Example 1**

**1. Preparation of Positive Electrode Active Material**

Preparation of First Lithium Nickel-based Composite Oxide

First, a nickel-based composite hydroxide ($Ni_{0.945}Co_{0.04}Al_{0.015}(OH)_2$), which was a precursor of a first positive electrode active material, was synthesized in a co-precipitation method described in more detail elsewhere herein. For example, nickel sulfate ($NiSO_4 \cdot 6H_2O$), cobalt sulfate ($CoSO_4 \cdot 7H_2O$), and sodium aluminium sulfate ($NaAl(SO_4)_2 \cdot 12H_2O$) were dissolved in a molar ratio of 94.5:4:1.5 in a solvent of distilled water to prepare a mixed solution of the metal raw materials. In order to form a complexed compound, aqueous ammonia ($NH_4OH$) and sodium hydroxide (NaOH) as a precipitant were prepared.

$1^{st}$ step (e.g., act or task): 2.5 kW/m$^3$, $NH_4OH$ 0.40 M, pH 10.5-11.5, reaction time 6 hours

First, the aqueous ammonia was added at a concentration of 0.40 M to a reactor. Subsequently, a reaction began at a stirring power of 2.5 kilowatt per cubic meter (kW/m$^3$) and a reaction temperature of 50 °C, while the metal raw material mixed solution and the complexing agent ($NH_4OH$) were added thereto at 85 mL /min and 10 mL /min, respectively. The reaction was performed for 6 hours, while NaOH was added thereto in order to maintain pH. After checking if (e.g., when) core particles obtained as a result of the reaction had an average size of about 6.5 micrometer ($\mu$m) to 7.5 $\mu$m, the $2^{nd}$ step (e.g., act or task) was performed as described herein.

$2^{nd}$ step (e.g., act or task): 2.0 kW/m$^3$, $NH_4OH$ 0.45 M, pH 10.5 to 11.5, reaction time 18 hours

The reaction temperature was maintained at 50 °C, while the metal raw material mixed solution and the complexing agent were added at 85 mL /min and 12 mL /min, respectively, and the complexing agent was set at a concentration of 0.45 M. While NaOH was added thereto in order to maintain pH, a reaction was performed for 18 hours. Herein, the stirring power was lowered to 2.0 kW/m$^3$, which is less than in the $1^{st}$ step (e.g., act or task). After checking if (e.g., when) the obtained particles including the core and a middle layer had an average size in a range of 13.5 $\mu$m to 14 $\mu$m, the $3^{rd}$ step (e.g., act or task) was performed as described herein.

$3^{rd}$ step (e.g., act or task): 1.5 kW/m$^3$, $NH_4OH$ 0.45 M, pH 10.5 to 11.5, reaction time 14 hours

The reaction temperature was maintained at 50 °C, and the metal raw material mixed solution and the complexing agent were added at the same speed as in the $2^{nd}$ step (e.g., act or task), and the concentration of the complexing agent was also set to be the same as in the $2^{nd}$ step (e.g., act or task). While NaOH was added thereto in order to maintain pH, a reaction was performed for 14 hours. Herein, the stirring power was lowered to 1.5 kW/m$^3$, which is less than in the $2^{nd}$ step (e.g., act or task).

Post-process

The resulting material was washed and dried with hot air at about 150 °C for 24 hours, obtaining a first nickel-based composite hydroxide ($Ni_{0.945}Co_{0.04}Al_{0.015}(OH)_2$).

First Firing

First, the first nickel-based composite hydroxide obtained from the post-process and LiOH were mixed in a molar ratio of Li/(Ni+Co+Al)=1.01, and then primarily fired at 820 °C for 8 hours under an oxygen atmosphere in a furnace to manufacture a composite oxide (a first fired product). Subsequently, the composite oxide was pulverized to have an average particle diameter ($D_{50}$) of about 13 micrometer ($\mu$m) by utilizing an airflow impact mill. Then, a first lithium nickel-based composite oxide having a composition of $Li_{1.01}Ni_{0.945}Co_{0.04}Al_{0.015}O_2$ in the form of secondary particles in which at least a portion of primary particles were radially arranged was manufactured.

### 2. Preparation of Second Lithium Nickel-based Composite Oxide

A second nickel-based composite hydroxide ($Ni_{0.94}Co_{0.04}Al_{0.01}Mn_{0.01}(OH)_2$), which was a precursor of a second positive electrode active material, was synthesized in a co-precipitation method. For example, nickel sulfate (Ni-$SO_4 \cdot 6H_2O$), cobalt sulfate ($CoSO_4 \cdot 7H_2O$), sodium aluminium sulfate ($NaAl(SO_4)_2 \cdot 12H_2O$), and manganese sulfate ($MnSO_4 \cdot H_2O$) as metal raw materials in a molar ratio of 94:4:1:1 were dissolved in a solvent of distilled water to prepare a mixed solution. The subsequent synthesis was the same as described for the first nickel-based composite hydroxide.
The obtained second nickel-based composite hydroxide was mixed with hydroxide lithium in a molar ratio of 1:1, and then heat-treated at 870 °C under an oxygen atmosphere. Subsequently, the obtained product was pulverized by utilizing an airflow impact mill, obtaining a second lithium nickel-based composite oxide ($LiNi_{0.94}Co_{0.04}Al_{0.1}Mn_{0.01}O_2$) in the form of single particles having an average particle diameter ($D_{50}$) of about 2 micrometer ($\mu$m).

### 3. Preparation of Final Positive Electrode Active Material

The first lithium nickel-based composite oxide and the second lithium nickel-based composite oxide were mixed in a weight ratio of 8:2, and this mixture was mixed with a washing water (distilled water) in a weight ratio of 1:0.9 to perform washing. Subsequently, after separating the washing water, the obtained product was dried at 180 °C and secondarily fired at 750 °C for 8 hours to prepare a final positive electrode active material in which the first positive electrode active material and the second positive electrode active material were mixed.

### 4. Manufacture of Rechargeable Lithium Battery Cell

98.5 wt% of the final positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and, then dried and compressed to manufacture a positive electrode.
97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and, then dried and compressed to manufacture a negative electrode.
A polytetrafluoroethylene separator was utilized, and an electrolyte solution prepared by dissolving 1 M $LiPF_6$ in a mixed solvent of ethylene carbonate and dimethyl carbonate in a volume ratio of 3:7 was utilized to manufacture a rechargeable lithium battery cell in a common method.

### Comparative Example 1

In the washing step (e.g., act or task) of the positive electrode active material, after mixing the pulverized first fired product (i.e. the first lithium nickel-based composite oxide and the second lithium nickel-based composite oxide) and the washing water in a weight ratio of 1:0.9, 0.6 parts by weight of the washing water was further added thereto to perform the washing under a condition that the pulverized first fired product and the washing water have a weight ratio of 1:1.5. Except for this difference, a positive electrode active material and a rechargeable lithium battery cell were manufactured in substantially the same manner as in Example 1.

### Evaluation Example 1: STEM and EELS Analysis

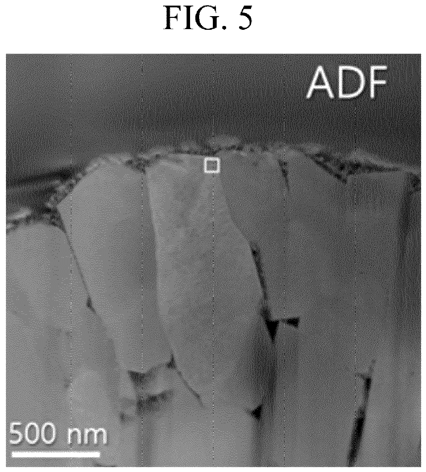

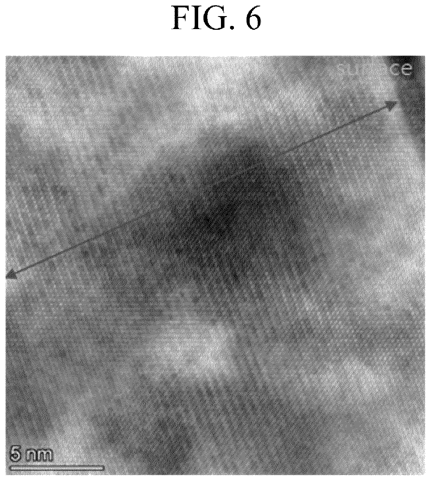

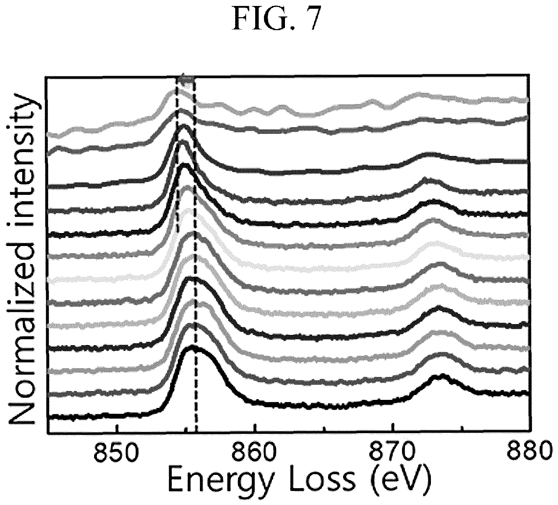

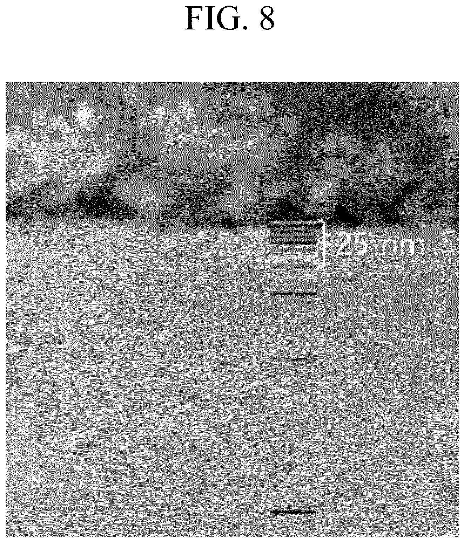

The thickness of the nickel reduction layer may be specifically measured by the following methods. (i) Obtain a TEM image of a cross-section of particle of a positive electrode active material cut by FIB, (ii) enlarge an area near the surface of the particle in the cross-sectional TEM image to obtain a STEM image, (iii) perform EELS analysis from the surface to the inside of the particle in the STEM image to obtain EELS data at each depth, and (iv) find graphs in which the peak near 855 eV is shifted to the left in the EELS data, and determine at what depth from the surface of the particle these graphs appear, and define the depth as the thickness of the nickel reduction layer. FIG. 5 is an Annular dark-field transmission electron microscope (ADF-TEM) image of a cross-section of the first positive electrode active material in the form of radial secondary particles, which was cut with FIB, among the positive electrode active material according to Comparative Example 1. FIG. 6 is a scanning transmission electron microscope (STEM) image produced by enlarging a portion marked by a square in FIG. 5. In a direction marked by an arrow in FIG. 6, an electron energy loss spectroscopy (EELS) analysis was conducted, and the result is shown in FIG. 7. In FIG. 7, a portion where a peak around 855 electron volt (eV) was shifted to the left may be (e.g., said to be) the location where the oxidation number of nickel was changed to less than 3+. This condition was displayed by reflecting a thickness in the TEM image of the cross section of the positive electrode active material according to Comparative Example 1 of FIG. 8. Referring to FIG. 8, a nickel reduction layer where the oxidation number of nickel was changed to less than 3+ had a thickness of about 25 nanometers (nm).

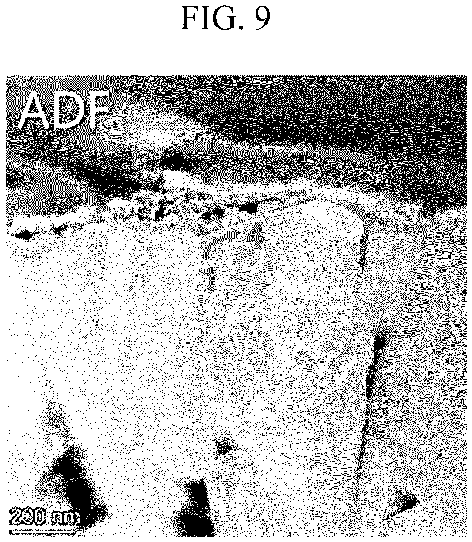

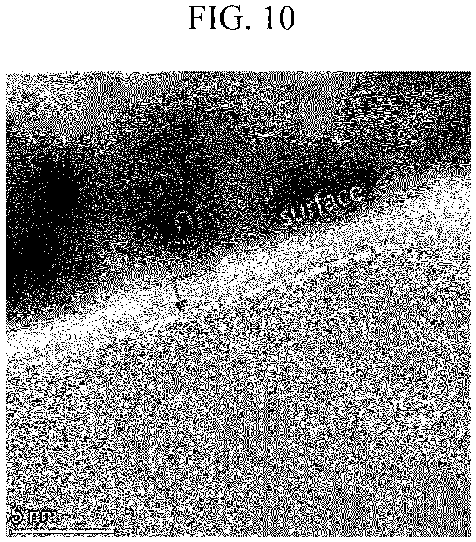

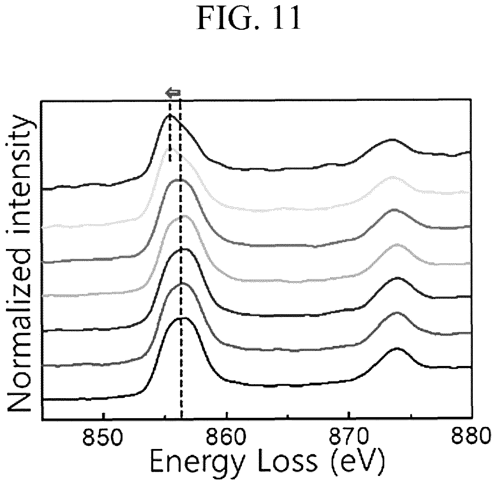

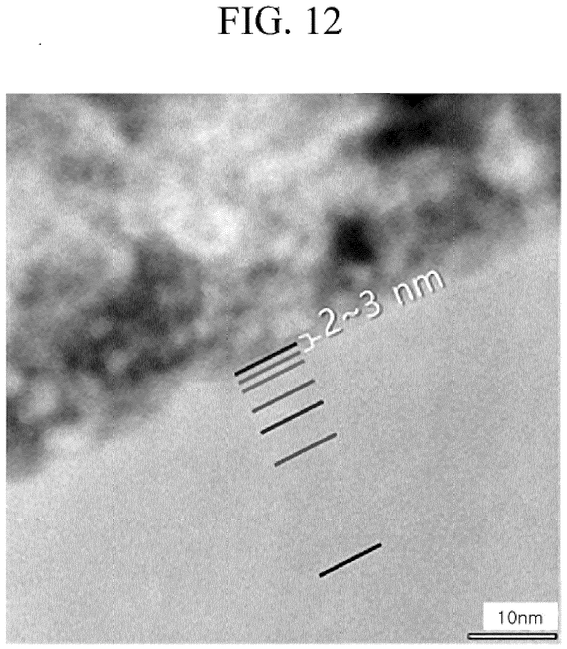

FIG. 9 is an ADF-TEM image of a cross-section of the first positive electrode active material in the form of radial secondary particles cut by FIB among the positive electrode active material particles of Example 1. FIG. 10 is a STEM image obtained by enlarging a portion marked by an arrow in FIG. 9. In FIG. 10, an EELS analysis was conducted in a depth direction, and the result is shown in FIG. 11. Similarly, a portion where a peak around 855 eV was shifted to the left in FIG. 11 is where the oxidation number of nickel is changed to less than 3+. This condition was displayed by reflecting a thickness in the TEM image of the cross section of the positive electrode active material according to Example 1 of FIG. 12. Referring to FIG. 12, in Example 1, a nickel reduction layer where the oxidation number of nickel was changed to less than 3+ had a thickness of about 3 nanometers (nm).

Comparative Example 1 exhibits a nickel reduction layer thickness of 25 nanometers (nm), but Example 1 exhibits a thickness of less than or equal to 7 nanometers (nm), which was (e.g., became) thinner than Comparative Example 1.

**Evaluation Example 2: DSC Analysis**

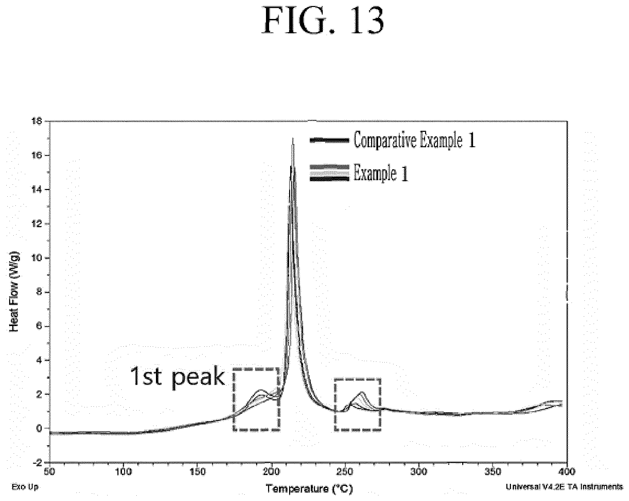

Differential scanning calorimetry (DSC) analysis was performed on the prepared positive electrode active materials of Example 1 and Comparative Example 1, and the results are shown in FIG. 13. DSC analysis was measured using a differential scanning calorimeter (SENSYS Evo; SETARAM Instrumentation). Specifically, 15 mg of the positive electrode charged to 4.45 V (vs. Li/Li+) was collected, 20 $\mu\ell$ of electrolyte was added to create an evaluation cell, and the temperature was increased to 400 °C at a rate of 10 °C/min, and the heat flow according to the temperature was measured. Three graphs of Example 1 correspond to three experimental results of the positive electrode active material of Example 1. Referring to FIG. 13, Comparative Example 1 exhibits a first peak around 190 °C, but Example 1 exhibits no peak at the corresponding temperature.

In one or more embodiments, through the DSC analysis, exothermic heat was calculated at the first peak around 190 °C, and the results are shown in Table 1. Table 1 shows two analysis results of Comparative Example 1 and three analysis results of Example 1.

Table 1

|  | 1st peak exothermic heat (J/g) |
|---|---|
|  | 68 |
| Comparative Example 1 | 52 |
|  | 4 |
| Example 1 | 19 |
|  | 5 |

Referring to Table 1, Example 1 exhibits exothermic heat of 19 joule per gram (J/g) or less at about 190 °C, which is lower than that of Comparative Example 1.

**Evaluation Example 3: Evaluation of Cycle-life Characteristics**

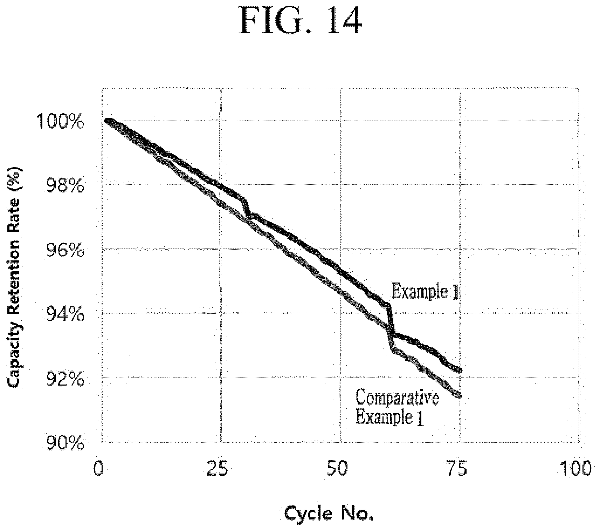

The rechargeable lithium batteries of Example 1 and Comparative Example 1 were charged at a constant current of 0.2 C to 4.45 V and charged to 0.05 C at a constant voltage and then, discharged to 3.0 V at 0.2 C at 25 °C for initial charge and discharge. Subsequently, the cells were 75 cycles charged and discharged at 1.0 C within a voltage range of 3.0 V to 4.45 V at 45 °C. FIG. 14 shows Capacity Retention Rate according to the number of cycles. Referring to FIG. 14, Example 1 exhibits much improved cycle-life characteristics, compared with Comparative Example 1.

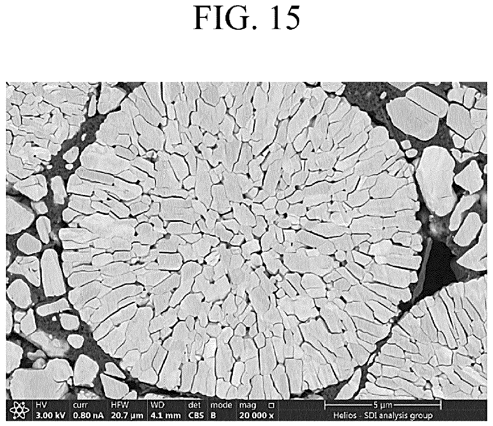

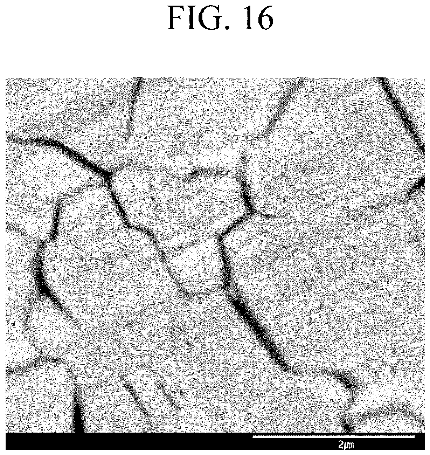

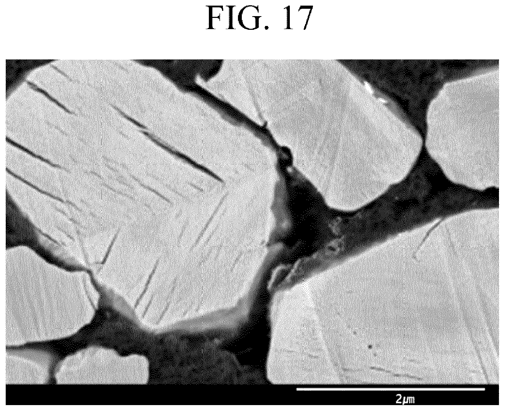

FIG. 15 shows a SEM image showing a cross-section of the positive electrode active material of Comparative Example 1 after 75 cycles. FIG. 16 is an image obtained by enlarging large particles in the form of secondary particles in FIG. 15. FIG. 17 is an image obtained by enlarging small particles in the form of single particles in FIG. 15. Referring to FIGs. 15 to 17, Comparative Example 1 exhibits cracks and micropores in both (e.g., simultaneously) the large particles and the small particles after the 75 cycles, which confirms that structural degradation had progressed.

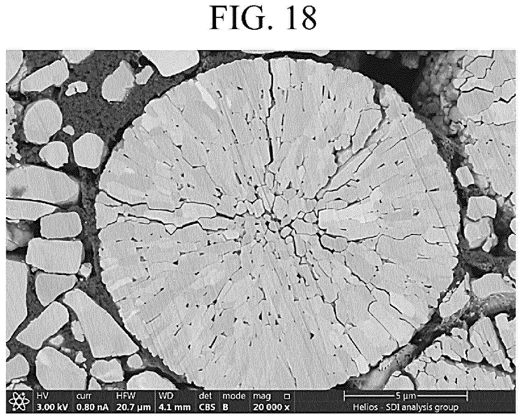

FIG. 18 is an SEM image showing a cross-section of the positive electrode active material of Example 1 after the 75 cycles. Referring to FIG. 18, unlike Comparative Example 1, Example 1 exhibits relatively few (e.g., almost neither) cracks and (e.g., nor) micropores in both (e.g., simultaneously) the large particles and the small particles, which confirms that the structural degradation was effectively suppressed or reduced, and accordingly, cycle-life characteristics of Example 1 are understood to be improved.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the present disclosure is not limited to the disclosed embodiments. In contrast, the present disclosure is intended to cover one or more suitable modifications and equivalent arrangements included within the scope of the appended claims, and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode. | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |
| 120: | electrode assembly | 130: | electrode tab |

**Claims**

1. A positive electrode active material, the positive electrode active material comprising:

   a particle comprising

   a core of a lithium nickel-based composite oxide; and
   a nickel reduction layer on a surface of the core and comprising nickel with an oxidation number of less than 3+,

   the nickel reduction layer having a thickness of less than, or equal to, 10 nm from a surface of the particle toward a center of the particle.

2. The positive electrode active material as claimed in claim 1, wherein nickel is in an amount greater than, or equal to, 80 mol% based on 100 mol% of a total amount of metal excluding lithium in the lithium nickel-based composite oxide.

3. The positive electrode active material as claimed in claim 1 or claim 2, wherein

the lithium nickel-based composite oxide is represented by Chemical Formula 1:

Chemical Formula 1 $\quad\quad Li_{a1}Ni_{x1}M^1y_1M^2_{z1}O_{2-b1}X_{b1}$

in Chemical Formula 1,

$$0.9 \leq a1 \leq 1.2,$$

$$0.8 \leq x1 < 1,$$

$$0 < y1 \leq 0.2,$$

$$0 \leq z1 \leq 0.2,$$

$$0.9 \leq x1+y1+z1 \leq 1.1,$$

$$0 \leq b1 \leq 0.1,$$

$M^1$ and $M^2$ are each independently at least one element selected from among Al, B, Ba, Ca, Ce, Co, Cr, Cu, Fe, Mg, Mn, Mo, Nb, Si, Sn, Sr, Ti, V, W, Y, Zn, and Zr, and
X is at least one element selected from among F, P and S.

4. The positive electrode active material as claimed in any one of claims 1 to 3, wherein the thickness of the nickel reduction layer is 1 nm to 7 nm.

5. The positive electrode active material as claimed in any one of claims 1 to 4, wherein the oxidation number of the nickel of the nickel reduction layer is greater than, or equal to, 2+ and less than 2.5+.

6. The positive electrode active material as claimed in any one of claims 1 to 5, wherein:

    (i) an oxidation number of the nickel of the particle excluding the nickel of the nickel reduction layer is 3+; and/or
    (ii) the nickel reduction layer comprises NiO.

7. The positive electrode active material as claimed in any one of claims 1 to 6, wherein:

    (i) the particle is in the form of a single particle or a secondary particle, the secondary particle being an agglomeration of a plurality of primary particles; and/or
    (ii) the positive electrode active material is in the form of particles comprising the particle, and

    wherein an average particle diameter ($D_{50}$) of the particles is 0.5 $\mu$m to 20 $\mu$m.

8. The positive electrode active material as claimed in any one of claims 1 to 7, wherein:

    (i) a ratio of a peak intensity at 250 °C to a peak intensity at 220 °C is less than 20 in a differential scanning calorimetry analysis of the positive electrode active material; and/or
    (ii) the positive electrode active material excludes a peak in a range of 170 °C to 210 °C in a differential scanning calorimetry analysis.

9. The positive electrode active material as claimed in any one of claims 1 to 8, wherein the positive electrode active material has an exothermic heat of less than, or equal to, 30 joule per gram (J/g) in a range of 170 °C to 210 °C in a differential scanning calorimetry analysis.

10. A method of preparing a positive electrode active material, the method comprising:

    mixing a nickel-based composite hydroxide and a lithium raw material followed by a first firing;

pulverizing a first fired product and washing with a washing water to provide a washed first fired product; and
drying the washed first fired product followed by a second firing,
wherein a weight ratio of a pulverized first fired product and the washing water is 1:0.5 to 1:0.9.

11. The method as claimed in claim 10, wherein:

(i) the weight ratio is 1:0.7 to 1:0.9; and/or
(ii) nickel is an amount of 80 mol% to 99 mol% based on 100 mol% of a total amount of metal in the nickel-based composite hydroxide.

12. The method as claimed in claim 10 or claim 11, wherein

the nickel-based composite hydroxide is represented by Chemical Formula 11:

Chemical Formula 11    $Ni_{x11}M^{11}{}_{y11}M^{12}{}_{z11}(OH)_2$

in Chemical Formula 11,

$$0.8 \leq x11 < 1,$$

$$0 < y11 \leq 0.2,$$

$$0 \leq z11 \leq 0.2,$$

$$0.9 \leq x11 + y11 + z11 \leq 1.1,$$

and
$M^{11}$ and $M^{12}$ are each independently at least one element selected from among Al, B, Ba, Ca, Ce, Co, Cr, Cu, Fe, Mg, Mn, Mo, Nb, Si, Sn, Sr, Ti, V, W, Y, Zn, and Zr.

13. The method as claimed in any one of claims 10 to 12, wherein:

(i) a mole ratio of a metal of the nickel-based composite hydroxide and a lithium of the lithium raw material is 1:0.9 to 1:1.2; and/or
(ii) the first firing is performed at a temperature of 700 °C to 950 °C, and

the second firing is performed at a temperature of 600 °C to 820 °C.

14. A positive electrode for a rechargeable lithium battery, comprising the positive electrode active material as claimed in any one of claims 1 to 13.

15. A rechargeable lithium battery, comprising

the positive electrode as claimed in claim 14,
a negative electrode, and
an electrolyte.

FIG. 1

FIG. 2

# FIG. 3

# FIG. 4

FIG. 5

# FIG. 6

EP 4 553 045 A1

## FIG. 7

24

# FIG. 8

# FIG. 9

# FIG. 10

# FIG. 11

# FIG. 12

# FIG. 13

# FIG. 14

# FIG. 15

FIG. 16

FIG. 17

# FIG. 18

EP 4 553 045 A1

| | Europäisches Patentamt European Patent Office Office européen des brevets | **EUROPEAN SEARCH REPORT** | **Application Number** EP 24 21 1266 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN HO-HYUN ET AL: "Impact of Microcrack Generation and Surface Degradation on a Nickel-Rich Layered Li[Ni 0.9 Co 0.05 Mn 0.05 ]O 2 Cathode for Lithium-Ion Batteries", CHEMISTRY OF MATERIALS, vol. 29, no. 19, 27 September 2017 (2017-09-27), pages 8486-8493, XP055845299, US ISSN: 0897-4756, DOI: 10.1021/acs.chemmater.7b03268 * abstract, section 2.1, section 3.5, figure 6 * | 1-9,14, 15 | INV. C01G53/42 C01G53/84 |
| X | YIN SHOUYI ET AL: "Fundamental and solutions of microcrack in Ni-rich layered oxide cathode materials of lithium-ion batteries", NANO ENERGY, ELSEVIER, NL, vol. 83, 4 February 2021 (2021-02-04), XP086943039, ISSN: 2211-2855, DOI: 10.1016/J.NANOEN.2021.105854 [retrieved on 2021-02-04] * abstract, page 2003767, figure 5 * | 1-9,14, 15 | |
| | | | **TECHNICAL FIELDS SEARCHED (IPC)** C01G H01M |
| | -/-- | | |

The present search report has been drawn up for all claims

| Place of search | Date of completion of the search | Examiner |
|---|---|---|
| Munich | 26 March 2025 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

36

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK NAM-YUNG ET AL: "Optimized Ni-Rich NCMA Cathode for Electric Vehicle Batteries", ADVANCED ENERGY MATERIALS, vol. 11, no. 9, 18 January 2021 (2021-01-18), page 2003767, XP093008517, ISSN: 1614-6832, DOI: 10.1002/aenm.202003767 Retrieved from the Internet: URL:https://onlinelibrary.wiley.com/doi/full-xml/10.1002/aenm.202003767> * abstract, section 2.1, section 3, figure 1 * | 1-9,14, 15 | |
| X | U.-H. KIM ET AL: "Pushing the limit of layered transition metal oxide cathodes for high-energy density rechargeable Li ion batteries", ENERGY & ENVIRONMENTAL SCIENCE, vol. 11, no. 5, 1 January 2018 (2018-01-01), pages 1271-1279, XP055765572, Cambridge ISSN: 1754-5692, DOI: 10.1039/C8EE00227D * abstract, figure 10 * | 1-9,14, 15 | **TECHNICAL FIELDS SEARCHED (IPC)** |
| X | FU ZEWEI ET AL: "Quantitative analysis of Ni2+/Ni3+in Li[NixMnyCoz]O2cathode materials: Non-linear least-squares fitting of XPS spectra", APPLIED SURFACE SCIENCE,, vol. 441, 12 February 2018 (2018-02-12), pages 1048-1056, XP085361504, DOI: 10.1016/J.APSUSC.2018.02.114 * abstract, section 2.3, section 2.4 * | 1-9,14, 15 | |

-/--

The present search report has been drawn up for all claims

| Place of search | Date of completion of the search | Examiner |
|---|---|---|
| Munich | 26 March 2025 | King, Ruth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

## EUROPEAN SEARCH REPORT

Application Number

EP 24 21 1266

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/119167 A1 (MATSUMOTO SATOSHI [JP] ET AL) 17 May 2012 (2012-05-17)<br>* paragraphs [0013], [0025], [0069], [0071], [0074], [0108], [0109]; example 1; table 1 *<br>- - - - - | 10-13 | |
| | | | **TECHNICAL FIELDS SEARCHED (IPC)** |

The present search report has been drawn up for all claims

| Place of search | Date of completion of the search | Examiner |
|---|---|---|
| Munich | 26 March 2025 | King, Ruth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 1266

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | | Publication date |
|---|---|---|---|---|
| US 2012119167 A1 | 17-05-2012 | CN | 102484250 A | 30-05-2012 |
| | | JP | 5409174 B2 | 05-02-2014 |
| | | JP | 2011034861 A | 17-02-2011 |
| | | KR | 20120041205 A | 30-04-2012 |
| | | US | 2012119167 A1 | 17-05-2012 |
| | | WO | 2011016372 A1 | 10-02-2011 |

EPO FORM P0459

For more details about this annex : see Official Journal of the European Patent Office, No. 12/82